Europäisches Patentamt

European Patent Office

Office européen des brevets

(19)

(11) Publication number: **0 037 277**

**A1**

(12)

# EUROPEAN PATENT APPLICATION

(21) Application number: **81301375.2**

(22) Date of filing: **30.03.81**

(51) Int. Cl.³: **B 65 G 1/08**
**A 47 B 57/04, A 47 B 57/20**

(30) Priority: **01.04.80 US 136396**

(43) Date of publication of application:
**07.10.81 Bulletin 81/40**

(84) Designated Contracting States:
**BE DE FR GB NL SE**

(71) Applicant: **INTERLAKE, INC.**
**Commerce Plaza 2015 Spring Road**
**Oak Brook Illinois 60521(US)**

(72) Inventor: **Rasmussen, George E.**
**22927 East Drive**
**Richton Park Illinois 60471(US)**

(72) Inventor: **Donkle, Lucius B., Jr.**
**3602 Lake Shore Drive**
**Michigan City Indiana 46360(US)**

(74) Representative: **Baillie, lain Cameron et al,**
**c/o Ladas & Parry Blumenstrasse 48**
**D-8000 München 2(DE)**

(54) Gravity-feed storage and delivery system.

(57) A gravity-feed storage and delivery rack includes upstanding support frames and a plurality of vertically-spaced shelf frames (30) mounted between the support frames by means of mounting clips (60) which have prongs receivable in complementary apertures (25) in the columns of the support frames. The clips (60) are channel-shaped along their entire length, the channel side walls (62) having inclined retaining surfaces thereon which cooperate with the associated support column (21) to form a notch providing a wedge-fit for a side rail (32) of the shelf frame. Each shelf frame side rail (32) is provided with a plurality of apertures adjacent to the rear end thereof for receiving a stop pin which projects laterally therefrom for engagement with the rear columns of the support frames to facilitate front-to-back adjustment of the shelf frames with respect to the rack. A mezzanine construction is disclosed having stacked racks with vertical-column support frames and front-to-back staggered shelf frames.

./...

FIG.3

- 1 -

GRAVITY-FEED STORAGE AND DELIVERY SYSTEM

The present invention relates to a gravity-feed storage and delivery rack.

Such gravity-feed rack constructions are disclosed for example, in U.S. Patents Nos. 3,063,534 and 3,900,112 and, as outlined in those patents, such systems afford a number of advantages over standard shelving in industry, warehousing and retailing applications. Such rack assemblies typically comprise a plurality of vertically-spaced shelf frames mounted between upstanding support frames, the shelf frames being inclined slightly from the horizontal to provide an inclined ramp down which merchandise can slide from the back to the front of the rack assembly. Prior art arrangements include vertical-front racks with the front columns of the support frames being vertical and with the front edges of the shelf frames all being in vertical alignment with one another. There are also provided "layback" arrangements, wherein the front support columns of the support frames are inclined rearwardly, with the shelf frames being arranged in a front-to-back staggered relationship to facilitate access to the merchandise stored thereon, particularly the removal of individual items from cartons.

But in both of these arrangements, the shelf frames are connected at the same points thereon to the support frames by means of hanger clips or the like, the clips typically fitting into cutout notches or recesses in the shelf frames. There is no provision for adjusting the position of an individual shelf frame forwardly and rearwardly with respect to the support frames. Thus, "layback" arrangements can be provided only by using support frames having rearwardly inclined front columns and the angle of the "layback" must follow that of the inclined support columns. This disadvantage is particularly troublesome in the mezzanine arrangements where one row of storage racks is stacked atop another. For structural reasons support frames having all vertical columns are preferable for mezzanine arrangements because they facilitate the interconnection of the upper and lower racks. But this prevents the use of "layback" shelf frame arrangements in mezzanine applications.

Furthermore, the mounting clips used in these prior art devices have relatively poor lateral strength and rigidity and tend to become bent or deformed as a result of lateral stresses in the rack system. Also the manner of interconnection of the mounting clips with the shelf frames affords an undesirable amount of play, tending to result in a loose and rattly construction.

The present invention provides an improved gravity-feed storage and delivery rack which overcomes the disadvantages of prior art systems and affords additional structural and operating advantages, and also provides an improved mounting clip for interconnecting the shelf frames and the support columns of a gravity-feed storage and delivery rack, the mounting clip having enhanced strength and rigidity.

The present invention provides a mounting clip for use in a gravity-feed storage and delivery rack for connecting a shelf frame side rail to an upstanding support column having a vertical wall with a plurality of longitudinally spaced-apart apertures therein, said mounting clip comprising and elongated channel-shaped body including a main wall and two side walls respectively projecting from the opposite side edges of said main wall and extending substantially the entire length thereof, prongs projecting from said side walls away from said main wall and receivable in selected ones of the apertures in an associated support column to secure said body in a mounted configuration on the support column, bearing surfaces on said side walls engageable with the verticle wall of the associated support column for limiting the depth of insertion of said prongs and cooperating therewith rigidly to hold said body in position on the support column, each of said side walls having a retaining surface thereon extending from one end thereof toward the corresponding bearing surface, and each of said side walls having a support surface thereon extending between said bearing surface and said retaining surface thereof, said retaining surfaces cooperating with the vertical wall of the associated support column when said body is disposed in the mounted configuration thereon to form a notch for receiving therein the lower end of the associated shelf frame side rail for engagement with said support surfaces and support thereon.

The present invention also provides a gravity-feed storage and delivery rack, comprising an upstanding support column having a vertical wall with a plurality of longitudinally spaced-apart apertures therein; a shelf frame having an elongated side rail adapted for connection to said support columns for support thereby; and a mounting clip for interconnecting said shelf frame side rail and said support column, said mounting clip comprising an elongated channel-shaped body including a main wall and two side walls respectively projecting from the opposite side edges of said main wall and extending substantially the entire length thereof, prongs projecting from said side walls away from said main wall and receivable in selected ones of said apertures in said support column to secure said body in a mounted configuration on said support column, bearing surfaces on said side walls engageable with said vertical wall of said support column for limiting the depth of insertion of said prongs and cooperating therewith rigidly to hold said body in said mounted configuration on said support column, each of said side walls having a retaining surface thereon extending from one end thereof toward the corresponding bearing surface, and each of said side walls having a support surface thereon extending between said bearing surface and said retaining surface thereof, said retaining surfaces cooperating with said vertical wall of said support column when said body is disposed in the mounted configuration thereon to form a notch for receiving therein said shelf frame side rail for engagement with said support surfaces and support thereon.

The invention, both as to its organization and method of operation, together with further features and advantages thereof, will best be understood by reference to the following specification taken in connection with the accompanying drawings.

FIG. 1 is a fragmentary elevational view of a mezzanine construction incorporating the gravity-feed storage and delivery rack of the present invention;

FIG. 2 is a perspective view of a single storage rack bay constructed in accordance with and embodying the features of the present invention;

FIG. 3 is an enlarged fragmentary perspective view of one of the shelf frames of the storage rack of FIG. 2, with portions thereof broken away more clearly to illustrate the construction thereof and the manner of interconnection thereof with a support column;

FIG. 4 is a reduced view taken along the line 4-4 in FIG. 3, illustrating one of the shelf frame side rails;

FIG. 5 is an enlarged perspective view of one of the mounting clips constructed in accordance with and embodying the features of the present invention;

FIG. 6 is an enlarged fragmentary view in partial section taken along the line 6-6 in FIG. 3; and

FIG. 7 is a fragmentary side elevational view of the rear portion of the storage rack of FIG. 2, as viewed from the left-hand side thereof and illustrating the manner of shelf frame adjustment.

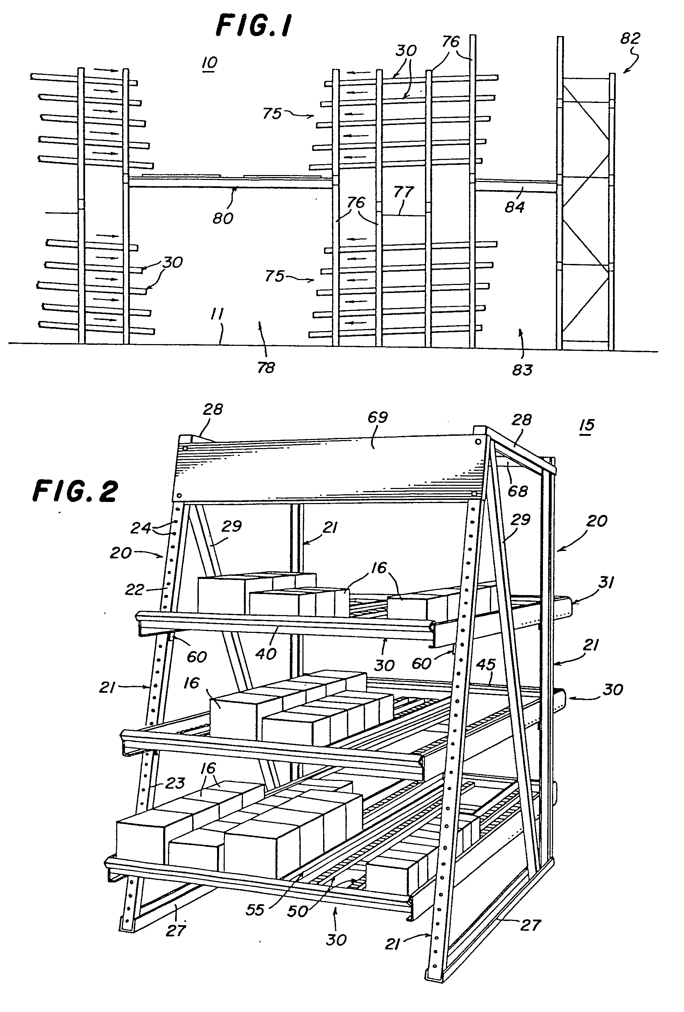

Referring to FIGS. 1 and 2 of the drawings, there is illustrated a gravity-feed storage system, generally designated by the numeral 10, which is disposed upon the floor 11 of a warehouse, factory or the like, and includes a plurality of substantially identical storage rack units or bays 15 or 75, each of which is designed for the gravity-feed storage of a plurality of packages or cartons 16 of merchandise in a well-known manner. While the system 10 illustrated in FIG. 1 is a mezzanine-type arrangement comprising two levels of storage, it will be understood that single-level systems may also be used. Such systems typically comprise a plurality of storage rack bays 15 or 75 arranged side by side in a straight line along a transport aisle to provide a storage system of any desired length.

Each storage rack bay 15 includes a pair of upstanding support frames, generally designated by the numeral 20, between which are mounted a plurality of vertically-spaced shelf frames, generally designated by the numeral 30. Each support frame 20 includes at least two upright support columns 21 respectively disposed at the front and rear of the support frame 20, each column 21 being generally channel-shaped in a transverse cross section and including a main wall 22 and two side walls 23. The main wall 22 has a plurality of longitudinally equidistantly spaced-apart circular apertures 24 therein, while each of the side walls 23 has a plurality of longitudinally spaced-apart rectangular slots 25 therein, the slots 25 preferably being arranged in two parallel rows, with the slots of one row being longitudinally offset with respect to the slots of the other row a distance equal to one-half the distance between adjacent slots in a row. The main wall 22 is also provided with a plurality of indicia 26 comprising a scale for measuring distance along the column 21. Suitable numerals may also be inscribed at intervals along the columns 21 to facilitate reading of the scale.

Each of the support columns 21 is fixedly secured at the lower end thereof to a bottom rail 27 and at the upper end thereof to a top rail 28, the bottom and top rails 27 and 28 also being interconnected by a diagonal brace 29, the members 27, 28 and 29 all being of channel-shaped construction. While the support frames 20 are illustrated in FIG. 2 with the rearmost support columns 21 thereof vertical and with the frontmost support columns 21 thereof inclined rearwardly, it will be appreciated that the support frames 20 may also be formed with the front and rear support columns thereof parallel, either vertical or inclined rearwardly. It will be understood that additional support columns 21 and diagonal braces 29 may be provided, as necessary, depending upon the overall front-to-back depth of the support frames 20. It will also be understood that, as additional storage rack bays 15 are added to the system, each additional bay requires only one additional support frame 21, since it will share a support frame 21 in common with the adjacent bay.

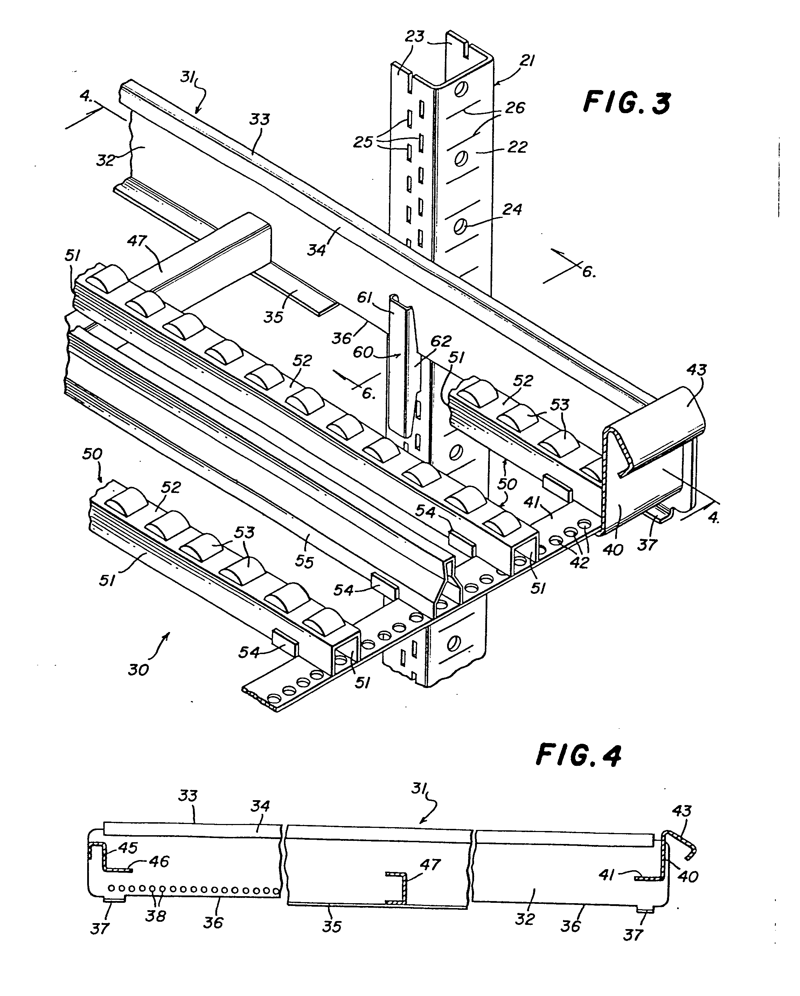

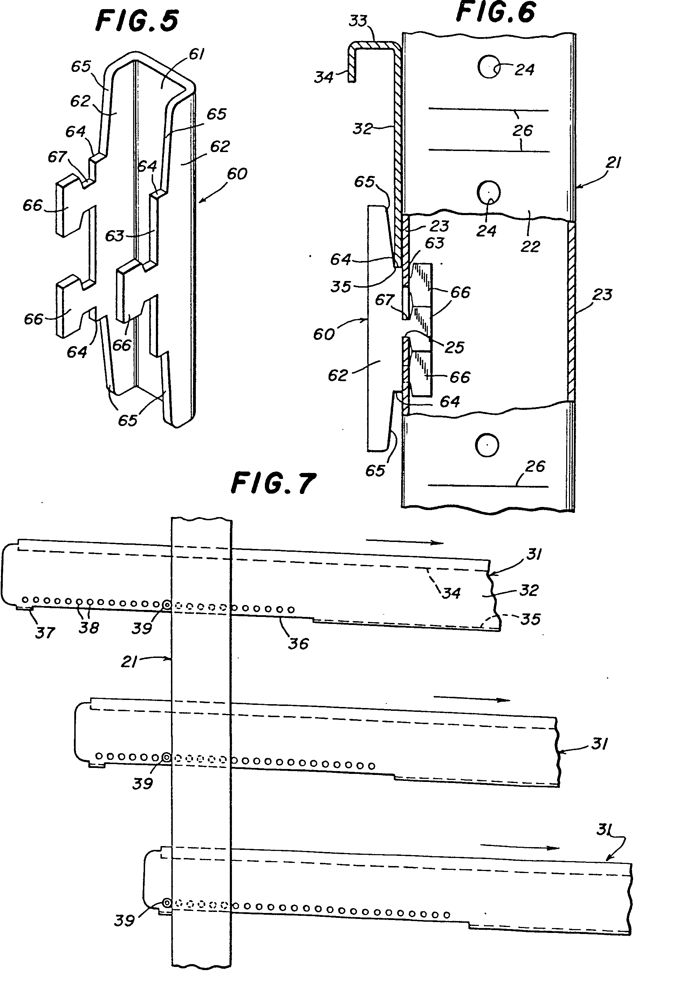

Referring now also to FIGS. 3 through 7 of the drawings, each of the shelf frames 30 includes a pair of laterally spaced-apart side rails 31 which are constructed substantially as mirror images of each other. Each of the side rails 31 includes an elongated flat planar main wall 32 substantially rectangular in shape and provided at the upper edge thereof with a laterally inwardly extending top flange 33 having a depending lip 34 thereon, the main wall 32 being provided at the lower edge thereof with a laterally inwardly extending bottom flange 35. The bottom flange 35 is cut away along elongated sections adjacent to the front and rear ends thereof to expose the lower edge of the main wall 32 to provide support edges 36. The remaining portions of the bottom flange 35 at the front and rear ends of the side rail 31 form stop fingers or tabs 37 for a purpose to be explained more fully below. Formed in the main wall 32 adjacent to the rear end thereof is a row of longitudinally equidistantly spaced-apart circular apertures 38, adapted to receive therethrough a stop pin or bolt 39 (see FIG. 7) which may be secured in place by a complementary nut (not shown).

The side rails 31 of the shelf frame 30 are interconnected adjacent to the front and rear ends thereof respectively by a front rail 40 and a rear rail 45. The front rail 40 comprises a flat rectangular plate which forms a front wall for the shelf frame 30 and is provided at the lower edge thereof with a rearwardly extending rectangular attachment flange 41 which is provided with a plurality of longitudinally equidistantly spaced-apart holes 42 therein. The front rail 40 is provided at the upper edge thereof with a downwardly and forwardly inclined front flange 43, which may conveniently form a handle or handgrip for facilitating handling of the shelf frame 30 and may be used for affixing thereto a label, nameplate or the like to identify the merchandise stored on the shelf frame 30.

The rear rail 45 forms a rear wall for the shelf frame 30, and includes a forwardly extending rectangular attachment flange 46 which is preferably also provided with a plurality of equidistantly longitudinally spaced-apart holes (not shown) therein. There may also be provided a cross channel 47 for interconnecting the side rails 31 intermediate the ends thereof, the opposite ends of the cross channel 47 preferably being disposed upon the bottom flanges 35 of the side rails 31. Preferably, the front and rear rails 40 and 45 and the cross channel 47 are fixedly secured to the side rails 31 as by welding. It will be understood that, depending upon the front-to-back depth of the shelf frame 30, additional cross channels 47 may be provided as needed.

Each of the shelf frames 30 also includes a plurality of wheel tracks, generally designated by the numeral 50. Referring to FIG. 3, each of the wheel tracks 50 includes an elongated channel member having a pair of legs 51 interconnected by a bight portion 52, the bight portion 52 having a plurality of longitudinally spaced-apart rectangular apertures therein. Mounted between the legs 51 are a plurality of shafts or axles (not shown) respectively rotatably carrying roller wheels 53 which respectively project upwardly through the apertures in the bight portion 52.

In use, each of the wheel tracks 50 is disposed with the bight portion 52 thereof positioned upwardly and with the opposite ends of the legs 51 respectively overlying the attachment flanges 41 and 46 of the front and rear rails 40 and 45. Preferably, attachment clips 54 are secured to the front and rear ends of each of the wheel tracks 50, the attachment clips 54 extending beneath the attachment flanges 41 and 46 and having projections which extend upwardly through the holes 42 therein fixedly to position the wheel tracks 50 on the shelf frame 30. Preferably, the wheel tracks 50 are arranged in pairs, each pair of wheel tracks 50 defining a front-to-back path along the shelf frame 30 for supporting a row of cartons 16, the lateral spacing of the wheel tracks 50 in each pair varying with the width of the cartons 16 to be supported thereon. It will be appreciated that, in the event of unusually long cartons, more than two wheel tracks 50 may be provided in each path to provide the necessary support for the cartons.

The carton paths are separated by elongated guide rails 55 which are generally in the shape of inverted channel members, the front and rear ends of which respectively overlie the attachment flanges 41 and 46 and are secured thereto by attachment clips 54 in the same manner as are the wheel tracks 50. The guide rails 55 cooperate with each other and with the side rails 31 of the shelf frame 30 to guide the cartons 16 along the wheel track paths and limit lateral movement thereof. It will also be appreciated that, in use, the wheel tracks 50 overlie the cross channels 47, the upper flanges of which are arranged to be substantially coplanar with the attachment flanges 41 and 46.

Referring now in particular to FIGS. 3, 5 and 6 of the drawings, the shelf frames 30 are mounted on the support frames 20 by the use of mounting clips, generally designated by the numeral 60. Each mounting clip 60 is generally channel-shaped in transverse cross section, including an elongated flat rectangular main wall 61 and two side walls 62 respectively integral with the main wall 61 and projecting therefrom along the side edges thereof. The side walls 62 are respectively provided with elongated substantially coplanar bearing surfaces 63 intermediate the ends thereof. The bearing surfaces 63 are substantially parallel to the main wall 61 and are respectively connected at the opposite ends thereof by short support shoulders 64 to guide surfaces 65 which extend from the support shoulders 64 to the adjacent ends of the mounting clip 60 and are inclined outwardly toward the main wall 61. Preferably, the support shoulders 64 are substantially normal to the bearing surfaces 63, while the guide surfaces 65 are inclined at an angle of about five degrees to the bearing surfaces 63.

One of the side walls 62 is provided with two prongs 66 projecting from the corresponding bearing surface 63 away from the main wall 61, the prongs 66 being connected to the bearing surface 63 by a narrow neck 67. The prongs 66 are shaped complementary to the rectangular slots 25 in the support columns 21 and are spaced apart the same distance as are the slots 25. The other side wall 62 of the mounting clip 60 has a single prong 66 projecting from the bearing surface 63 thereof and positioned midway between the prongs of the first side wall 62.

In use, the mounting clip 60 is attached to a support column 21 by inserting the prongs 66 into selected ones of the slots 25, it being appreciated that the two prongs 66 on one of the mounting clip side walls 62 will be disposed in adjacent slots 25 in one row of slots, while the single prong 66 on the other mounting clip side wall 62 will be disposed in the intermediate slot in the adjacent row of slots on the column 21. The prongs 66 are dimensioned so as to just fit through the slots 25, the narrow necks 67 permitting the mounting clip 60 to drop into a latched position on the support column 21 when the enlarged head portions of the prongs 66 have passed all the way through the side wall 23 of the support column 21, as illustrated in FIG. 6. When disposed in this mounted configuration illustrated in FIG. 6, the bearing surfaces 63 of the mounting clip 60 will be disposed in engagement with the outer surface of the support column side wall 23. Preferably, the neck portions 67 of the mounting clip prongs 66 have a length only very slightly greater than the width of the support column side wall 23 so as to provide a firm and non-wobbling mounting of the clip 60 on the support column 21.

In use, two mounting clips 60 are respectively fastened to the inner sides of the frontmost support columns 21 of the storage rack bay 15 at a first vertical level, and two mounting clips 60 are respectively mounted on the inner side walls of the rearmost ones of the support columns 21 at a second vertical level which is slightly higher than the first level of the front clips, the indicia 26 on the support columns 21 serving to facilitate accurate positioning of the mounting clips 60 thereon. In this regard, it will be noted that when a mounting clip 60 is moved upwardly one slot 25 along the support column 21, without changing the orientation of the mounting clip 60, it will have been moved the distance between the indicia. But it will also be noted that the mounting clip 60 is a double-ended clip, and if the clip is inverted, it can be moved in increments one-half the distance between the indicia by inserting the single prong 66 into either the upper or lower one of the pair of slots 25 in which the pair of prongs 66 had previously been inserted.

When the mounting clips 60 have been mounted in the desired positions on the support columns 21, the shelf frame 30 is mounted in place between the support frames 20 by lowering it into place onto the mounting clips 60. In this regard, it will be noted that the bottom flanges 35 of the shelf frame side rails 31 have been removed in the regions adjacent to the support columns 21, so that the support edges 36 of the side rails 31 can slide into the notches defined by the mounting clip guide surfaces 65 and the adjacent side walls 23 of the support columns 21, as best seen in FIGS. 3 and 6. The support edges 36 are lowered into engagement with the support shoulders 64 of the mounting clips 60 securely to support the shelf frame 30 on the mounting clips 60.

The inclined guide surfaces 65 of the mounting clips 60 serve to guide the shelf frame side rails 31 into position on the mounting clips 60 and also serve to provide a secure wedge fit of the shelf frame side rails, which insures a firm mounting of the shelf frame 30, even in the event of slight dimensional irregularities in the thickness of the side rails 31. Also, the channel shape of the mounting clips 60 along the entire length thereof substantially increases the strength and rigidity thereof to prevent bending of the mounting clips 60 in response to lateral stresses in the storage rack.

Because of the elevation of the rear mounting clips 60 with respect to the front mounting clips 60, there will be a slight inclination of the shelf frame 30 which will cause the cartons 16 to roll downwardly and forwardly along the paths of the wheel tracks 50 in a well-known manner. Thus, cartons may be added to each row of cartons at the rear end thereof and will progress forwardly for removal at the front end of the shelf frame 30.

The unique construction of the shelf frame side rails 31 permits front-to-back adjustability of the position of the shelf frame 30 on the support frames 20. Thus, instead of being provided with a single notch at each of the front and rear ends thereof for engagement with the corresponding mounting clips 60, as in the prior art, the shelf frame side rails 31 have elongated support edges 36 thereon. Thus, it will be appreciated that the shelf frame 30 can be slid forwardly or rearwardly the entire length of the support edges 36 to any desired position, this movement being limited by engagement of the stop fingers 37 with the adjacent mounting clips 60. In order to facilitate the accurate positioning of the shelf frame 30, the apertures 38 at the rear ends of the side rails 31 are spaced apart by predetermined intervals and may be provided with suitable indicia to further facilitate accurate positioning.

Thus, the shelf frame 30 may be moved forwardly or rearwardly until a predetermined one of the apertures 38 is disposed adjacent to the rear edge of the rearmost support column 21 of the support frames 20, with the stop pin 39 being inserted into the predetermined aperture to prevent further forward movement of the shelf frame 30. Thus, by simply positioning the pins 39 at the same position in each of the shelf frame side rails 31, accurate location of the shelf frame 30 without warping thereof is easily achieved. Referring to FIG. 7, it can be seen that by varying the locations of the pins 39 in adjacent shelf frames by a predetermined number of apertures, a front-to-back staggered or "layback" arrangement of the shelf frames can be achieved, regardless of whether the front support columns 21 of the support frames 20 are vertical or inclined. This affords a significant advantage over prior art systems, wherein "layback" arrangements could be achieved only by providing rearwardly inclined front support columns on the support frames, since each of the prior art shelf frame side rails was provided with only one location adjacent to each of the front and rear ends thereof for attachment to the support columns.

While the shelf frames 30 will serve as cross members of the storage rack bay 15 for holding the support frames upright, there is preferably also provided an angle brace 68 interconnecting the rearmost support columns 21 at the upper ends thereof, and a sway brace 69 interconnecting the frontmost support columns 21 at the upper ends thereof, further to rigidify the storage rack structure, the angle brace 68 and sway brace 69 being fixedly secured to the support frames by means of suitable fasteners extending through the circular holes 24 in the support columns 21. While the shelf frames 30 illustrated in the drawings are all of the substantially flat type, it will be understood that the shelf frames could have the front ends thereof downwardly inclined at various angles, as illustrated in U.S. Patent No. 3,900,112, to facilitate removal of tall items from the cartons 16, all as is well-known in the art.

In addition to the mounting clips 60, auxiliary shelf clamps (not shown) may be used, particularly in the case of very deep storage rack bays 15, for connecting the shelf frame side rails 31 to intermediate support columns of the support frames 20.

One of the most important advantages of the front-to-back adjustability of the shelf frames 30 of the present invention is realized in mezzanine-type constructions, such as the one illustrated in FIG. 1. In such arrangements, two rows of storage rack bays are stacked one atop the other. While it is possible to stack storage rack bays 15 of the type illustrated in FIG. 2, with rearwardly inclined front support columns, it is much more convenient to stack storage rack bays having all vertical support columns, such as the bays illustrated in FIG. 1 and designated by the numeral 75. Each v ertical support column 76 of the upper 75 may be directly connected in vertical alignment with the corresponding support column 76 of the lower bay 75, with cross braces 77 utilized where necessary to stabilize the arrangement.

In practice, two stacks of the bays 75 are arranged facing each other on opposite sides of an aisle 78. A mezzanine platform 80 spans the aisle 78 at the top of the lower bays 75, stairways (not shown) being provided at predetermined points along the aisle to provide access to the mezzanine platform 80. Preferably, there is provided behind each of the stacks of storage rack bays 75 a pallet storage rack 82 (one shown), which is spaced from the rear end of the associated bay 75 by an aisle 83. A catwalk 84 spans the aisle 83 and interconnects the pallet storage rack 82 and the storage rack bay 75 at the top of the lower bay 75. It will be understood that the pallet storage rack 82 extends the entire length of the row of storage rack bays 75.

In use, pallets containing reserve stocks of cartons are stored on the pallet storage racks 82 and cartons 16 are removed therefrom and inserted at the rear ends of the shelf frames 30 of the storage rack bays 75 for restocking thereof by personnel walking along the aisle 83 and the catwalk 84. Preferably, conveyors may be provided along the aisle 78 and the catwalk 80 for order-picking purposes. Personnel can then walk along the aisle 78 and the catwalk 80 and remove cartons or individual items from the shelf frames 30 and deposit them in containers for transmission along the conveyors in a well-known manner.

It will be appreciated that by reason of the adjustability of the shelf frames 30 of the present invention, a front-to-back staggered or "layback" arrangement of the shelf frames 30 may be provided on each of the upper and lower storage rack bays 75, despite the fact that all vertical support columns 76 are utilized.

In a constructional model of the present invention, the support frames 20 and sway braces 68 and 69 are preferably formed of steel, as are the shelf frame side rails 31, front rail 40, rear rail 45 and cross channels 47. The wheel tracks 50 and guide rails 55 may be formed of galvanized steel and the roller wheels 53 are preferably formed of high-density polyethylene. The mounting clips 60 are formed of plated steel and the attachment clips 54 are formed of a suitable plastic.

From the foregoing, it can be seen that there has been provided an improved gravity-feed storage and delivery system which includes improved mounting clips for interconnecting shelf frames and support frames, as well as a novel shelf frame side rail construction which affords front-to-back adjustability of the shelf frames with respect to the support frames and ready marking of the predetermined adjustment position.

CLAIMS

1.  A mounting clip for use in a gravity-feed merchandise storage and delivery rack for connecting a shelf frame side rail to an upstanding support column having a vertical wall with a plurality of longitudinally spaced-apart apertures therein, said mounting clip being characterized by an elongated channel-shaped body including a main wall (61) and two side walls (62) respectively projecting from the opposite side edges of said main wall and extending substantially the entire length thereof, prongs (66) projecting from said side walls away from said main wall and receivable in selected ones of the apertures in an associated support column to secure said body in a mounted configuration on the support column, bearing surfaces (63) on said side walls engageable with the vertical wall of the associated support column for limiting the depth of insertion of said prongs and cooperating therewith rigidly to hold said body in position on the support column, each of said side walls having a retaining surface (65) thereon extending from one end thereof toward the corresponding bearing surface, and each of said side walls having a support surface (64) thereon extending between said bearing surface and said retaining surface thereof, said retaining surfaces cooperating with the vertical wall of the associated support column when said body is disposed in the mounted configuration thereon to form a notch for receiving therein the lower end of the associated shelf frame side rail for engagement with said support surfaces and support thereon.

2.  The mounting clip of claim 1, characterized in that said retaining surfaces (65) are inclined with respect to said bearing surfaces.

3.  The mounting clip of claim 1 or 2, characterized in that one of said side walls (62) has two spaced-apart prongs (66) thereon and the other of said side walls has a single prong (66) thereon disposed intermediate the prongs on said one side wall.

4. The mounting clip of claim 1, 2 or 3, characterized in that said mounting clip is of unitary single-piece construction.

5. The mounting clip of any of claims 1 to 4, characterized in that each of said side walls (62) has two retaining surfaces (65) thereon respectively extending from the opposite ends thereof toward the corresponding bearing surface (63), and two support surfaces (64) respectively extending between said bearing surface and said retaining surfaces.

6. A gravity-feed merchandise storage and delivery rack, comprising an upstanding support column (21) having a vertical wall (23) with a plurality of longitudinally spaced-apart apertures (25) therein; a shelf frame (30) having an elongated side rail (31) adapted for connection to said support columns for support thereby; and a mounting clip (60) for interconnecting said shelf frame side rail and said support column, said mounting clip being characterized by an elongated channel-shaped body including a main wall (61) and two side walls (62) respectively projecting from the opposite side edges of said main wall and extending substantially the entire length thereof, prongs (66) projecting from said side walls away from said main wall (61) and receivable in selected ones of said apertures (25) in said support column (21) to secure said body in a mounted configuration on said support column, bearing surfaces (63) on said side walls engageable with said vertical wall (23) of said support column for limiting the depth of insertion of said prongs (66) and cooperating therewith rigidly to hold said body in said mounted configuration on said support column (21), each of said side walls (62) having a retaining surface (65) thereon extending from one end thereof toward the corresponding bearing surface (63), and each of said side walls (62) having a support surface (64) thereon extending between said bearing surface (63) and said retaining surface thereof (65), said retaining surfaces (65) cooperating with said vertical wall (23) of said support column (21) when said body is disposed in the mounted configuration thereon to form a notch for receiving therein said shelf frame side rail (31) for engagement with said support surfaces and support thereon.

7. The rack of claim 6, characterized in that said side rail (31) has a bottom flange (35) and elongated sections of said bottom flange are removed in regions adjacent to the associated support columns (21) to facilitate connection of said shelf frame side rail (31) to said mounting clip (60).

8. The rack of claim 6 or 7, characterized in that said side rail (31) includes a stop tab (37) thereon disposed for engagement with said mounting clip to limit front-to-back adjustment of said shelf frame with respect to said support column.

9. The rack of claim 6, 7 or 8, characterized in that said apertures (25) and said mounting clip prongs (66) are substantially rectangular in transverse cross section.

10. The rack of any of claims 6 to 9, characterized in that said side rail includes an elongated member (32) having a plurality of equidistantly longitudinally spaced-apart apertures (38) therein adjacent to the rear end thereof, and a stop member (39) receivable in a selected one of said apertures and projecting from said elongated member for engagement with a rear one of the associated support columns (21) when the associated shelf frame (30) is mounted thereon accurately to position the shelf frame front-to-back with respect to the rack, thereby to facilitate front-to-back staggering of the shelf frames on the support columns.

11. The rack of any of claims 6 to 9, wherein each of said shelf frames (30) include a pair of elongated side rails (31), front and back members (40,45) interconnecting said side rails, and merchandise support tracks (50) carried between said front and back members.

12. The rack of any of claims 6 to 11, characterized in that the front-most ones of said support columns (21) are inclined rearwardly.

13. The rack of any of claims 6 to 11, each of said support columns (21) is substantially vertical, each of said shelf frames (30) being positioned a predetermined distance rearwardly of the adjacent shelf frame therebeneath.

**FIG.1**

**FIG.2**

**FIG.3**

**FIG.4**

**FIG.5**

**FIG.6**

**FIG.7**

**European Patent Office**

**EUROPEAN SEARCH REPORT**

Application number

EP 81 30 1375.2

| DOCUMENTS CONSIDERED TO·BE RELEVANT | | | CLASSIFICATION OF THE APPLICATION (Int Cl.³) |
|---|---|---|---|
| Category | Citation of document with indication, where appropriate, of relevant passages | Relevant to claim | |
| D | US - A - 3 900 112 (AZZI et al.) <br> * entire document * <br> -- | 1,3,4, 6,9,11 | B 65 G 1/08 <br> A 47 B 57/04 <br> A 47 B 57/20 |
| | US - A - 2 261 956 (BROWNLIE et al.) <br> * page 2, left column, lines 3 to 24 * <br> -- | 1,4 | |
| | FR - A1 - 2 381 492 (PREVOST) <br> * fig. 1 and 3 * <br> -- | 1 | |
| | FR - A - 2 175 313 (AUBERT) <br> * fig. 2 and 3 * <br> -- | 1 | **TECHNICAL FIELDS SEARCHED (Int. Cl.³)** |
| | FR - A - 1 156 565 (GALLET & CIE) <br> * claim 1; fig. 1 * <br> -- | 10 | A 47 B 57/00 <br> A 47 B 96/00 <br> A 47 F 1/00 <br> A 47 F 5/00 |
| D | US - A - 3 063 534 (AMOUR) <br> * column1, lines 58 to 63 * <br> -- | 12 | B 65 G 1/00 <br> B 65 G 13/00 |
| | US - A - 2 982 387 (HINCKLEY) <br> * fig. 1 * <br> -- | 12 | |
| | US - A - 2 969 863 (WOLDRING et al.) <br> * fig. 1 * <br> -- | 13 | **CATEGORY OF CITED DOCUMENTS** |
| | FR - A - 1 467 846 (CONSTRUCTIONS MILLS-K) <br> ---- | | X: particularly relevant <br> A: technological background <br> O: non-written disclosure <br> P: intermediate document <br> T: theory or principle underlying the invention <br> E: conflicting application <br> D: document cited in the application <br> L: citation for other reasons |

&: member of the same patent family, corresponding document

X The present search report has been drawn up for all claims

| Place of search | Date of completion of the search | Examiner |
|---|---|---|
| Berlin | 25-06-1981 · | SIMON |